(19) Europäisches Patentamt
European Patent Office
Office européen des brevets

(11) **EP 0 623 505 B1**

(12) **EUROPÄISCHE PATENTSCHRIFT**

(45) Veröffentlichungstag und Bekanntmachung des Hinweises auf die Patenterteilung:
**13.11.1996 Patentblatt 1996/46**

(51) Int. Cl.⁶: **B62M 11/16**, F16H 3/66, F16H 57/08

(21) Anmeldenummer: **94100396.4**

(22) Anmeldetag: **13.01.1994**

(54) **Mehrgang-Fahrradnabe**

Multispeed bicycle hub

Moyeu d'une bicyclette à plusieurs vitesses

(84) Benannte Vertragsstaaten:
**AT DE GB NL SE**

(30) Priorität: **26.04.1993 DE 4313558**

(43) Veröffentlichungstag der Anmeldung:
**09.11.1994 Patentblatt 1994/45**

(73) Patentinhaber: **FICHTEL & SACHS AG**
**D-97424 Schweinfurt (DE)**

(72) Erfinder: **Nürnberger, Günter**
**D-97422 Schweinfurt (DE)**

(56) Entgegenhaltungen:
CH-A- 277 523        FR-A- 1 304 756
GB-A- 19 986         GB-A- 2 166 502

# Beschreibung

Die Erfindung betrifft ein mehrstufiges Planetenrad eines wenigstens zwei Planetenräder aufweisenden Planetengetriebes, insbesondere für eine Fahrradnabe.

Fahrradnaben mit mehrstufigen Planetengetrieben sind bekannt (z.B. GB 21 66 502 B, DE 814 982, DE 41 42 867A1). Die einzelnen Stufen des Planetengetriebes werden zumeist dadurch angewählt, daß jeweils eines der stets mit den Planetenrädern kämmenden Sonnenräder an der ortsfesten Nabenachse momentan festgelegt wird, wohingegen die übrigen Sonnenräder frei drehbar sind. Eine weitere Schaltmöglichkeit ist häufig die, daß mit dem Antreiberzahnrad des Planetenradgetriebes wahlweise der Planetenradträger (Schnellgänge) oder das Hohlrad (Berggänge) verkoppelt wird, so daß dementsprechend ein zweistufiges Planetenradgetriebe zu zwei Schnellgängen und zwei Berggängen führt. Häufig ist auch noch ein direkter Gang vorhanden, so daß man insgesamt 5 Gänge erhält. Im Falle eines dreistufigen Planetengetriebes ergeben sich dementsprechend 7 Gänge.

In üblichen Planetengetrieben sind wenigstens drei Planetenräder eingesetzt, um für eine gleichmäßige Kräfteverteilung zu sorgen. Zu achten ist auf niedrige Herstellungskosten zumal im Falle des Einsatzes des Planetengetriebes in dem Massenprodukt Fahrradnabe. Gleichzeitig ist auf ausreichend mechanische Festigkeit und möglichst geringen Verschleiß zu achten. Diesen Anforderungen werden Sinterformteile gerecht. Sinterformteile werden spanlos durch Pressen von Metallpulver bei hohen Temperaturen hergestellt; sie erfordern keine Nacharbeit. Bei Bedarf kann das Material auch gehärtet werden. Jedoch bestehen Einschränkungen bezüglich der Formgebung, vor allem deshalb, weil die pulvrigen Ausgangsstoffe innerhalb der Preßform von den einander gegenüberliegenden und beim Pressen aufeinander zu bewegten Stempeln im wesentlichen nur in Achsrichtung verschoben werden. Radial nach innen vorstehende Absätze der Form können den Verdichtungsvorgang empfindlich stören. Andere Urformverfahren, wie z.B. Pulvermetall-Spritzguß oder -Feinguß, sind für den Massenartikel Fahrradnabe zu kostenaufwendig. Dies gilt auch für die möglichen spanabhebenden Fertigungsverfahren. Aufgrund der unterschiedlichen Zähnezahl der Planetenradstufen in Verbindung mit dem erforderlichen Werkzeugauslauf bei jeder Stufe sind die kostengünstigen Wälzverfahren, wie z.B. Wälzfräsen, praktisch ausgeschlossen. Die Herstellung des mehrstufigen Planetenrads durch eine NC-Stoßmaschine ist zwar an sich möglich, jedoch wiederum zu kostenaufwendig. Einer mehrteiligen Ausbildung des Planetenrads steht unter dem Gesichtspunkt der kostengünstigen Herstellung an sich entgegen, daß unbedingt sichergestellt sein muß, daß sämtliche Planetenräder des Planetengetriebes möglichst exakt gleiche Orientierung der Wälzverzahnungen der beiden Teile relativ zueinander aufweisen müssen. Ansonsten kann es zu Verspanungen innerhalb des Planetengetriebes kommen, da die Planetenräder ja ständig in das gemeinsame Hohlrad sowie in die gemeinsamen Sonnenräder eingreifen. Man mußte daher erwarten, daß bei zweiteiliger Planetenradausbildung eigens Maßnahmen zu treffen sind, um beim Zusammenfügen der beiden Teile die exakte gegenseitige Winkelausrichtung der beiden Teile sicherzustellen. Dies widerspräche jedoch wiederum einer kostengünstigen Herstellbarkeit.

Die Aufgabe der Erfindung liegt darin, eine Mehrgang-Fahrradnabe mit einem wenigstens zwei mehrstufige Planetenräder aufweisenden Planetengetriebe mit kostengünstiger Herstellbarkeit der Planetenräder bereitzustellen.

Diese Aufgabe wird dadurch gelöst, daß die mehrstufigen Planetenräder jeweils umfassen

- ein erstes Planetenradteil mit einem eine Planetenradstufe bildenden Wälzverzahnungsabschnitt und einem eine Kupplungsaußenumfangsverzahnung aufweisenden Kupplungsverzahnungsabschnitt; und
- ein zweites Planetenradteil mit wenigstens einem jeweils eine Planetenradstufe bildenden Wälzverzahnungsabschnitt sowie einer Aufnahmeöffnung für den Kupplungsverzahnungsabschnitt des ersten Planetenradteils, welche Aufnahmeöffnung mit einer in die Kupplungsaußenumfangsverzahnung eingreifenden Kupplungsinnenumfangsverzahnung versehen ist,

wobei die Wälzverzahnung sowie die Kupplungsaußenumfangsverzahnung des ersten Planetenradteils gleiche Zähnezahl und Zahnkranzorientierung aufweisen, und

wobei das zweite Planetenradteil von einem Sinterteil gebildet ist.

Da das erste Planetenradteil lediglich eine Planetenradstufe aufweist, kann die Kupplungsaußenumfangsverzahnung ohne weiteres durch kostengünstige, spanabhebende Verfahren, insbesondere durch Wälzfräsen oder Formfräsen, hergestellt werden. Da die Kupplungsaußenumfangsverzahnung gleiche Zahnteilung und Zahnkranzorientierung aufweist wie die Planetenradstufe, können beide Verzahnungen mit demselben Werkzeug in einer Aufspannung hergestellt werden. Dies reduziert die Herstellungskosten und sorgt gleichzeitig für exakt gleiche Zahnkranzorientierung von Wälzverzahnung und Kupplungsaußenumfangsverzahnung. Letzteres ist für das winkelexakte Zusammenfügen der beiden Planetenradteile wichtig. Das zweite Planetenradteil wird von einem Sinterteil gebildet, welches sowohl den Wälzverzahnungsabschnitt der wenigstens einen Planetenradstufe aufweist, wie auch die Kupplungsinnenumfangsverzahnung. Die Winkelorientierung der Zahnkränze der Planetenradstufen sowie der Kupplungsinnenumfangsverzahnung fällt bei der Herstellung stets mit derselben hohen Genauigkeit aus, da diese durch ein und dasselbe Preßwerkzeug bestimmt ist. Beide Teile können somit in beliebiger gegenseitiger Orientierung zusammengefügt werden; die Zahnkränze der Planetenradstufen des zusammengebauten Planetenrads haben stets die gleiche relative Orientierung.

Man könnte daran denken, die Kupplungsaußenumfangsverzahnung und die Wälzverzahnung des ersten Planetenradteils dadurch herzustellen, daß man den zylindrischen Rohkörper über seine gesamte Länge mit einer durchgehenden Verzahnung versieht und anschließend die Verzahnung bis auf den Kupplungsverzahnungsabschnitt teilweise abdreht zur Bildung der Kupplungsaußenumfangsverzahnung. Dies hätte zur Folge, daß der Kopfkreisdurchmesser der Kupplungsinnenumfangsverzahnung im wesentlichen dem Fußkreisdurchmesser der Wälzverzahnung entspräche und damit relativ groß wäre. Dies hätte eine zu geringe Wandstärke des Sinterteils zur Folge, da der Teilkreisdurchmesser, und damit auch der Fußkreisdurchmesser von der am ersten Planetenradteil vorgesehenen Planetenradstufe zur nächstfolgenden, am zweiten Planetenradteil vorgesehenen Planetenradstufe nicht allzu sehr ansteigt. Um eine größere minimale Wandstärke des zweiten Planetenradteils zuzulassen, wird vorgeschlagen, daß die Kupplungsaußenumfangsverzahnung einen kleineren Fußkreisdurchmesser aufweist als die Wälzverzahnung des Planetenradteils, und daß die Zahnform der Kupplungsaußenumfangsverzahnung im wesentlichen einer abgeschnittenen Zahnform der Wälzverzahnung des ersten Planetenradteils mit zylindrischer, zur Planetenradachse konzentrischer Schnittfläche entspricht. Die Kupplungsaußenumfangsverzahnung wird also in einfacher Weise dadurch hergestellt, daß in einer Aufspannung mit demselben Werkzeug zuerst beispielsweise die Wälzverzahnung hergestellt und anschließend, nach Verringerung des Abstands des Werkzeugs von der Achse des ersten Planetenradteils, die Kupplungsaußenumfangsverzahnung hergestellt wird. Vorher oder nachher wird das Teil bis auf die Wälzverzahnung teilweise abgedreht, so daß man die verkürzte Zahnform der Kupplungsaußenumfangsverzahnung erhält. Die zylindrische Schnittfläche der Fußkreisdurchmesser der Kupplungsaußenumfangsverzahnung definiert dann den Fußkreisdurchmesser bzw. den Kopfkreisdurchmesser der Kupplungsinnenumfangszahnung, deren Zahnform der Zahnlückenform der Kupplungsaußenumfangsverzahnung entspricht.

In Weiterbildung der Erfindung wird vorgeschlagen, daß das erste Planetenradteil zwischen dem Wälzverzahnungsabschnitt und dem Kupplungsverzahnungsabschnitt einen Zentrierabschnitt mit zylindrischer Außenumfangsfläche aufweist, mit einem dem Kopfkreisdurchmesser der Kupplungsaußenumfangsverzahnung entsprechenden Durchmesser, welcher an einer zylindrischen Innenumfangsfläche der Aufnahmeöffnung des zweiten Planetenradteils anliegt. Der Zentrierabschnitt stellt bewegungsspielfreien Sitz zwischen den beiden Planetenradteilen sicher. Der Zentrierabschnitt ergibt sich bei der Herstellung in einfacher Weise dadurch, daß das Werkzeug, insbesondere der Fräser, nach dem Auslaufen aus der Wälzverzahnung mit unverändertem Abstand zur Planetenradteilachse über den Zentrierabschnitt hinweg bewegt wird und erst anschließend zur Herstellung der Kupplungsaußenumfangsverzahnung zur Planetenradteilachse hin verlagert wird. Der Durchmesser der zylindrischen Außenumfangsfläche des Zentrierabschnitts ist dabei etwas geringer als der Fußkreisdurchmesser der Wälzverzahnung. Die zylindrische Außenumfangsfläche wird durch das teilweise Abdrehen des Planetenradteils vor oder nach dem Fräsen der Verzahnungen hergestellt.

Das zweite Planetenradteil als einfaches Sinterteil kann aus zwei Abschnitten unterschiedlicher Wandstärke gebildet sein, da die beiden Preßstempel des Preßwerkzeugs jeweils einen der beiden Abschnitte zu Formen imstande sind. Das Sinterteil kann daher zwei Planetenradstufen aufweisen. Bevorzugt ist vorgesehen, daß das Sinterteil die Planetenradstufe mit der größten Zahnzahl und die mittlere Planetenradstufe aufweist. Dies ergibt kompakten, materialsparenden Aufbau, da das in das Planetenradteil einzuschiebende erste Planetenradteil die Planetenradstufe mit dem kleinsten Durchmesser aufweist. Zudem kann das Sinterteil mit ausreichender Wandstärke ausgeführt sein, da der geringste Außendurchmesser durch die mittlere Planetenradstufe und nicht durch die kleinste Planetenradstufe definiert ist. Weiter wird vorgeschlagen, daß die Zähne der Kupplungsinnenumfangsverzahnung abrundete, vorzugsweise im wesentlichen zylindrisch abgerundete Zahngriffe aufweisen. Diesen entsprechen in der Form die Zahnlücken der Kupplungsaußenumfangsverzahnung. Diese Zahnform ist gratfrei und sorgt für zuverlässige Drehmomentübertragung zwischen den beiden Planetenradteilen.

Die Erfindung betrifft auch ein mehrstufiges Planetenrad eines wenigstens zwei mehrstufige Planetenräder aufweisenden Planetengetriebes in einer Fahrradnabe. Die Erfindung betrifft ferner ein Verfahren zur Herstellung eines mehrstufigen Planetenrads eines wenigstens zwei mehrstufige Planetenräder aufweisenden Planetengetriebes in einer Mehrgang-Fahrradnabe.

Die Erfindung wird im folgenden an Hand der Zeichnung an einem bevorzugten Ausführungsbeispiel erläutert. Es zeigt:

Fig. 1    einen Längsschnitt durch eine Mehrgang-Fahrradnabe mit zweiteiligem Planetenrad;

Fig. 2    einen vergrößerten Längsschnitt eines der beiden Planetenradteile;

Fig. 3    einen vergrößerten Längsschnitt des anderen Planetenradteils;

Fig. 4    einen Querschnitt des zusammengebauten Planetenradteils entsprechend den Schnitten IV-IV in Fig. 2 und Fig. 3; und

Fig. 5      eine Seitenansicht des Planetenradteils gemäß Fig. 1 mit Blickrichtung V.

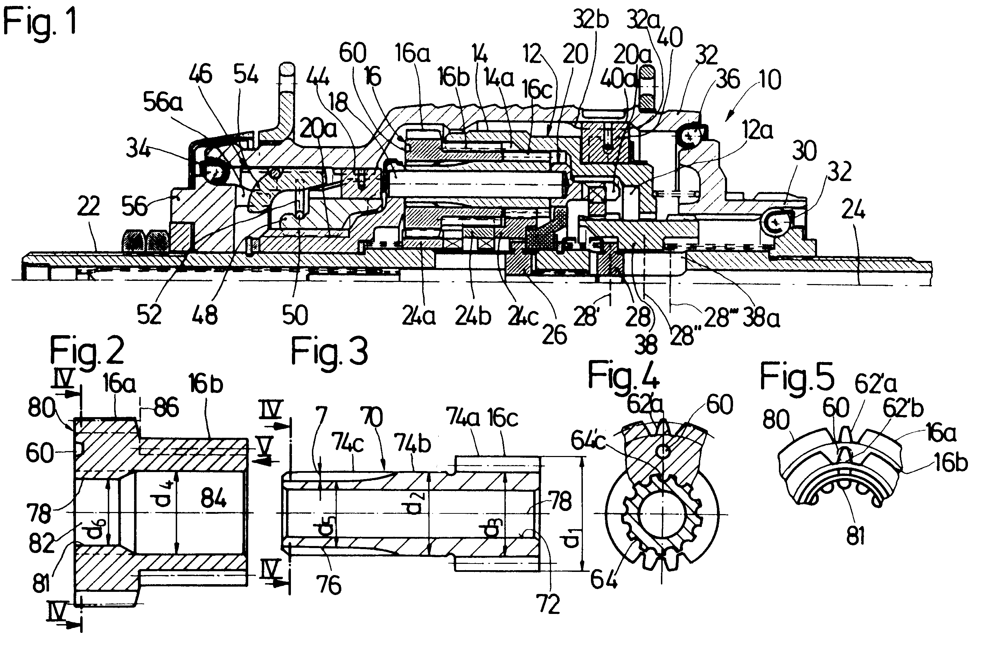

Die in Fig. 1 vereinfacht im Längsschnitt dargestellte Mehrgang-Fahrradnabe 10 weist als "Herzstück" ein Planetengetriebe 12, welches die erforderlichen Übersetzungen ins Schnelle (Schnellgänge) und Untersetzungen ins Langsame (Berggänge) bereitstellt.

Das Planetengetriebe 12 weist ein Hohlrad 14 auf, dessen Innenumfangsverzahnung 14a ständig mit Planetenrädern 16 kämmt, von denen zum Kräfteausgleich sowie zur Selbstzentrierung wenigstens zwei in jedem Planetengetriebe vorgesehen sind. Im Normalfalle sind es drei Planetenräder 16. Die Planetenräder 16 sind über Lagerbolzen 18 an einem gemeinsamen Planetenradträger 20 drehbar gelagert. Der käfigartig ausgestaltete Planetenradträger 20 ist über einen Lagerabschnitt 20a an einer ortsfesten Nabenachse 22 drehbar gelagert. Die Längsachse der Nabenachse definiert eine Drehachse 24 der Fahrradnabe 10, um die sich die beweglichen Teile der Fahrradnabe 10 drehen.

Die Planetenräder 16 sind dreistufig ausgebildet mit einer großen Planetenradstufe 16a mit maximaler Zähnezahl, einer mittleren Planetenradstufe 16b mit mittlerer Zähnezahl und einer kleinen Planetenradstufe 16c mit der geringsten Zähnezahl. Die mittlere Planetenradstufe 16b kämmt ständig mit dem Hohlrad 14. Sämtliche Planetenradstufen kämmen zudem ständig mit jeweils zugeordneten Sonnenrädern 24a,24b und 24c.

Mit Hilfe einer parallel zur Drehachse 24 bewegbaren Schaltklotzes 26 läßt sich wahlweise jeweils eines der Sonnenräder 24a,24b,24c drehfest an der Nabenachse 22 festlegen. Der Schaltklotz 26 ist in nicht dargestellter Weise mit einer Handschalteinrichtung am Fahrradlenker verbunden. Ein zweiter Schaltklotz 28, der ebenfalls mit der Handschalteinrichtung verbunden ist, dient der Umschaltung zwischen drei verschiedenen Kraftwegen von einem ein nicht dargestelltes Antreiberkettenrad tragenden Antreiber 30 auf eine Nabenhülse 32, an der die Fahrradspeichen für die Fahrradfelge angebracht sind. Der Antreiber 30 ist über ein Kugellager 32 an der Nabenachse 22 gelagert. Die Nabenhülse 32 ist über ein Kugellager 34 an der Nabenachse 32 und, am anderen Hülsenende, über ein Kugellager 36 am Antreiber 30 gelagert.

In der in Fig. 1 dargestellten, mit 28' bezeichneten linken Endstellung des Schaltklotzes 28 verläuft der Kraftweg vom Antreiber 30 über einen Kupplungsring 38 mit Kupplungsverzahnung 38a auf eine zugeordnete Kupplungsverzahnung 20a des Planetenradträgers 20. Der Planetenradträger 20 wiederum treibt über die Planetenräder 16 das Hohlrad 12 an, und zwar mit einer Übersetzung, die durch das jeweils festgelegte Sonnenrad 24a bis 24c bestimmt ist. Eine Freilaufkupplung in Form eines Klinkengesperres 40 sorgt für eine Mitnahme der Nabenhülse 32 durch das Hohlrad 12. Der Schnellgang mit der größten Übersetzung (7. Gang) wird durch Festlegen des größten Sonnenrads 24c zugeschaltet. Der 6. und 5. Gang werden durch Festlegung des Sonnenrads 24b bzw. des Sonnenrads 24a zugeschaltet.

Durch Verschieben des Schaltklotzes 28 in eine mit 28" bezeichnete Mittelstellung wird der Kupplungsring 38 dementsprechend in Fig. 1 nach rechts verschoben, wobei seine Kupplungsverzahnung 38a außer Eingriff mit der Kupplungsverzahnung 20a des Planetenradträgers 20 gelangt, jedoch in Eingriff mit einer entsprechenden Kupplungsverzahnung 12a des Hohlrads 12. Man erhält den direkten 4. Gang, bei dem der Kraftfluß vom Antreiber 30 über den Kupplungsring 38 auf das Hohlrad 12 und über die über Klinkenkupplung 40 auf die Nabenhülse 32 verläuft.

Durch weiteres Verlagern des Schaltklotzes 28 in die in Fig. 3 mit 28''' bezeichnete rechte Endstellung, wird das Hohlrad 12 mit dem Kupplungsring 38 nach rechts verschoben. Hierdurch wird die Klinkenkupplung außer Funktion gesetzt, da die Klinken 40a aufgrund einer Abweisschräge 32a am Innenumfang der Nabenhülse 32 radial nach innen geschwenkt werden und somit außer Eingriff mit den radial nach innen vorstehenden Kupplungsvorsprüngen 32b der Nabenhülse 32 gelangen.

Der Kraftfluß verläuft nunmehr vom Antreiber 30 über den Kupplungsring 38 auf das Hohlrad 12 und von diesem über die an einem der Sonnenräder 24a bis 24c abrollenden Planetenräder 16 auf den Planetenradträger 20. Dessen Drehbewegung wird über eine weitere Klinkenkupplung 44 auf die Nabenhülse 32 übertragen. Diese Klinkenkupplung 44 wird im übrigen in den Gängen 7, 6 und 5 von der schneller drehenden Nabenhülse 32 überholt.

Man erhält eine Untersetzung (Berggänge), und zwar die geringste Untersetzung (3. Gang) bei Zuschaltung des Sonnenrads 24a, eine mittlere Untersetzung (2. Gang) bei Zuschaltung des Sonnenrads 24b und die stärkste Untersetzung (1. Gang) bei Zuschaltung des Sonnenrads 24c).

Eine Bremseinrichtung 46 erlaubt in sämtlichen Gängen ein sofortiges Abbremsen der Nabenhülse 32 bei Rücktritt. Hierzu ist ein Bremsbetätigungsteil 48 über ein Steilgewinde 50 auf dem Abschnitt 20a des Planetenradträgers 20 gelagert. Bei Rücktritt sorgt eine an das Bremsteil 48 angreifende, ortsfeste Vorspannfeder 52 dafür, daß das Bremsteil 58 momentan nicht mitdreht und somit aufgrund des Steilgewindes sich in Fig. 1 nach links auf Bremsbacken 54 zubewegt. Entsprechende Schrägflächen am Bremsbetätigungsteil 58 und an den Bremsbacken 54 sorgen dafür, daß die Bremsbacken 54 radial nach außen zur bremsenden Anlage an die Innenumfangsfläche der Nabenhülse 32 gedrückt werden. Haltenasen 56a an einem an der Nabenachse 22 drehfest angebrachten Nabenflansch 56 verhindern ein Mitdrehen der Bremsbacken 54.

Eine Reihe von Vorspannfedern sorgen für die Rückführung der entsprechenden Teile in deren Ausgangsstellung.

Bei der Mehrgang-Fahrradnabe 10 als Massenprodukt kommt es auf kostengünstige Herstellbarkeit sämtlicher Teile sowie auf zuverlässige Funktion an. Bei den Planetenrädern 16 ist von ausschlaggebender Bedeutung, daß die Wälzverzahnungen der Planetenradstufen 16a,16b und 16c eine genau vorgegebene Zahnkranzorientierung relativ zueinander aufweisen, so daß dann unter Einhaltung einer einheitlichen Ausgangsorientierung sämtlicher drei Planetenräder 16 das Planetengetriebe 12 ohne irgendwelche Verzahnungszwängungen zusammengebaut werden kann.

Die Ausgangsorientierung eines Planetenrads 16 kann durch eine Vertiefung 60 an der in Fig. 1 linken Stirnseite markiert werden, die auch in den Fig. 2 und 4 angedeutet ist. Die Winkelorientierung der Zahnkränze der Planetenradstufen 16a,16b und 16c kann beispielsweise derart festgelegt werden, daß in der der Markierungsausnehmung 60 entsprechenden Winkelposition der entsprechende Zahn 62a' des Zahnkranzes der Planetenradstufe 16a genau in gleicher Winkelposition liegt, wie der entsprechende Zahn 62b' der Planetenradstufe 16b. Dagegen befindet sich gemäß Fig. 4 gerade eine Zahnlücke 64c' des Zahnkranzes der Planetenradstufe 16c in der genannten Winkelposition, definiert durch die Markierungsausnehmung 60.

Diese vorgegebene Orientierung der Zahnkränze der Planetenradstufen 16a,16b und 16c relativ zueinander wird trotz der zweiteiligen Ausbildung des Planetenrads zuverlässig eingehalten, wie aus den folgenden Erläuterungen hervorgeht.

Ein erstes Teil 70 der beiden Planetenradteile ist als Stahlteil ausgebildet, welches spanabhebend bearbeitet wird. Ausgangsprodukt ist eine Stahlhülse mit einer dem Außendurchmesser des Lagerbolzens 18 entsprechenden Durchgangsbohrung 72. Der Außendurchmesser der Hülse entspricht dem gewünschten Kopfkreisdurchmesser d1 der Verzahnung der Planetenradstufe 16c. Anschließend wird bis auf einen später die Planetenradstufe 16c bildenden Endabschnitt 74a die Hülse auf einen Durchmesser d2 abgedreht, der geringfügig kleiner ist als der Fußkreisdurchmesser d3 der anschließend zu fertigenden Verzahnung der Planetenradstufe 16c.

Unter Beibehaltung der Aufspannung wird nunmehr in einem Arbeitsgang mit einem entsprechenden Fräswerkzeug die Verzahnung der Planetenradstufe 16c hergestellt sowie eine Kupplungsaußenumfangsverzahnung 76. Hierzu wird das Fräswerkzeug nach Auslauf aus dem Abschnitt 74c relativ zum Werkstück weiter nach links bewegt, längs eines Mittelabschnitts 74b ohne Veränderung des Abstands des Werkzeugs von der Achse 78 des Werkstücks. Da der Durchmesser d2 dieses Abschnitts 74b geringfügig kleiner ist als der Kopfkreisdurchmesser d3, greift das Werkzeug momentan nicht in das Werkstück ein. Erst nach Erreichen eines Endabschnitts 74c (dessen Axiallänge durchaus auch etwa der Hälfte der Axiallänge des Werkstücks entsprechen kann) wird das Werkzeug näher an die Achse 78 herangefahren, so daß das Werkzeug in das Material des Werkstücks eingreift. Die Eindringtiefe des Werkzeugs, die die Zahnhöhe Z der Kupplungsaußenumfangsverzahnung 76 definiert, ist jedoch kleiner als die Zahnhöhe ($= 0,5 \times (d1 - d3)$) der Planetenradstufe 16c, da es nur um formschlüssigen Eingriff zwischen der Kupplungsaußenumfangsverzahnung 76 und einer entsprechenden Kupplungsinnenumfangsverzahnung 78 des zweiten Planetenradteils 80 geht. Da die Kupplungsaußenumfangsverzahnung 76 sowie die Planetenradstufe 16c mit einem Werkzeug und mit einer Werkzeugaufspannung hergestellt werden, ist die genau gleiche Winkelorientierung der beiden Zahnkränze von vorneherein sichergestellt.

Bei dem zweiten Planetenradteil 80 handelt es sich um ein Sinterteil, dessen Form exakt reproduzierbar durch die Sinterpreßform vorgegeben ist, so daß auch hier die exakte Einhaltung der relativen Zahnkranzorientierung der Zahnkränze der beiden Planetenradstufen 16a und 16b sowie der bereits erwähnten Kupplungsinnenumfangsverzahnung 78 sichergestellt ist. Die Zähne 81 der Kupplungsinnenumfangsverzahnung 78 entsprechen in ihrer Form genau den Zahnlücken zwischen den Zähnen der Kupplungsaußenumfangsverzahnung 76. Da diese Zahnlücken ($=$ Zahnfüße) im wesentlichen hohlzylindrisch gekrümmt sind, sind die Köpfe der Zähne 82 dementsprechend zylindrisch gekrümmt. Der Fußkreisdurchmesser d5 der Kupplungsaußenumfangsverzahnung 76 entspricht im wesentlichen dem Kopfkreisdurchmesser d6 der Kupplungsinnenumfangsverzahnung 78.

Die Kupplungsinnenverzahnung 78 ist Teil einer das Planetenradteil 80 durchsetzenden Aufnahmeöffnung 82, deren Axiallänge gerade der axialen Länge der Abschnitte 74c und 74b zusammengenommen entspricht. Ein sich an den Abschnitt mit der Kupplungsinnenverzahnung 78 anschließender übriger Abschnitt der Aufnahmeöffnung 82 weist eine zylindrische Innenumfangsfläche 84 mit einem Durchmesser d4 auf, der im wesentlichen dem Durchmesser d2 des Abschnitts 74b des Teils 70 entspricht.

Beide Teile 70 und 80 können somit Zusammengefügt werden, ggf. auch aufeinander aufgeschrumpft, um einen mechanisch soliden Zusammenhalt beider Teile 70 und 80 zu erhalten. Die Kupplungsverzahnungen 76 und 78 sorgen für die Einhaltung einer vorgegebenen relativen Drehorientierung der beiden Teile 70 und 80 zueinander. Der Abschnitt 74b mit seiner zylindrischen Außenumfangsfläche 86 liegt spielfrei an der Innenumfangsfläche 84 an, so daß Relativbewegungen zwischen beiden Teilen 70 und 80 ausgeschlossen sind.

Die Genauigkeit der Winkelorientierung der Planetenradstufen ist deshalb trotz einfacher Herstellbarkeit so hoch, weil zum einen die Winkelorientierung der Kupplungsaußenumfangsverzahnung 76 aufgrund der Fräsarbeit in einem Gang und in einer Aufspannung mit der Winkelorientierung der Planetenradstufe 16c übereinstimmt. Zum anderen wird beim Pressen des Sinterkörpers zur Herstellung des Teils 80 der die Kupplungsinnenumfangsverzahnung 78 sowie die Innenumfangsfläche 84 ausbildende Formkern genau in der gewünschten Orientierung relativ zu dem die Planetenradstufen 16a und 16b ausbildenden Formmantel gehalten, insbesondere durch einen ortsfesten Haltedorn, der einen der beiden als Hohlkolben ausgebildeten Pressenstempel durchsetzt. Beide Pressenstempel werden nach Elnfüllen des Metallpulvers in die Sinterform in Achsrichtung aufeinanderzu bewegt unter Komprimierung des Sinterpulvers, derart, daß die Pulverkörner sich von beiden Seiten auf die zwischen beiden Planetenradstufen 12a und 12b im Übergangsbereich gebildete Radialebene 86 aufeinanderzu bewegen. Man erhält so eine auch im Stufenbereich zwischen beiden Planetenradstufen 16a und 16b einwandfreie Pulverkomprimierung. Während oder nach dem Pressen wird das Teil gesintert, d.h. unter Schutzgas oder Vakuum bei knapp unterhalb der Schmelztemperatur der Hauptkomponente des Pulvers erhitzt.

Beide Teile 70 und 80 können vor dem Zusammenbau bei Bedarf gehärtet werden.

**Patentansprüche**

1. Mehrgang-Fahrradnabe (10) mit einem wenigstens zwei mehrstufige Planetenräder (16) aufweisenden Planetengetriebe (12), dadurch gekennzeichnet daß die Planetenräder (16) jeweils umfassen

   - ein erstes Planetenradteil (70) mit einem eine Planetenradstufe (16c) bildenden Wälzverzahnungsabschnitt (Abschnitt 74a) und einem eine Kupplungsaußenumfangsverzahnung (76) aufweisenden Kupplungsverzahnungsabschnitt; und
   - ein zweites Planetenradteil (80) mit wenigstens einem jeweils eine Planetenradstufe (16a;16b) bildenden Wälzverzahnungsabschnitt sowie einer Aufnahmeöffnung (82) für den Kupplungsverzahnungsabschnitt des ersten Planetenradteils (70), welche Aufnahmeöffnung (82) mit einer in die Kupplungsaußenumfangsverzahnung (76) eingreifenden Kupplungsinnenumfangsverzahnung (78) versehen ist,

   wobei die Wälzverzahnung sowie die Kupplungsaußenumfangsverzahnung (76) des ersten Planetenradteils (70) gleiche Zähnezahl und Zahnkranzorientierung aufweisen, und
   wobei das zweite Planetenradteil (80) von einem Sinterteil gebildet ist.

2. Mehrgang-Fahrradnabe nach Anspruch 1, dadurch **gekennzeichnet,** daß die Kupplungsaußenumfangsverzahnung (76) kleineren Fußkreisdurchmesser (d5) aufweist als die Wälzverzahnung (mit d3), und daß die Zahnform der Kupplungsaußenumfangsverzahnung (76) im wesentlichen einer abgeschnittenen Zahnform der Wälzverzahnung mit zylindrischer, zur Planetenradachse (78) konzentrischer Schnittfläche entspricht.

3. Mehrgang-Fahrradnabe nach Anspruch 2, dadurch **gekennzeichnet,** daß das erste Planetenradteil (70) zwischen dem Wälzverzahnungsabschnitt (Abschnitt 74a) und dem Kupplungsverzahnungsabschnitt (Abschnitt 74c) einen Zentrierabschnitt (Abschnitt 74b) mit zylindrischer Außenumfangsfläche (80) mit einem dem Kopfkreisdurchmesser der Kupplungsaußenumfangsverzahnung entsprechenden Durchmesser (d2) aufweist, und daß eine zylindrische Innenumfangsfläche (84) der Aufnahmeöffnung (82) des zweiten Planetenradteils (80) an der Außenumfangsfläche (80) anliegt.

4. Mehrgang-Fahrradnabe nach einem der vorhergehenden Ansprüche, dadurch **gekennzeichnet,** daß bei einem dreistufigen Planetenrad (16) das zweite Planetenradteil (80) die Planetenradstufe (16a) mit der größten Zahnzahl und die mittlere Planetenradstufe (16b) aufweist.

5. Mehrgang-Fahrradnabe nach einem der vorhergehenden Ansprüche, dadurch **gekennzeichnet,** daß die Zähne (81) der Kupplungsinnenumfangsverzahnung (78) abgerundete Zahnköpfe aufweisen.

6. Mehrgang-Fahrradnabe nach Anspruch 5, dadurch **gekennzeichnet,** daß die Zahnköpfe im wesentlichen zylindrisch abgerundet sind.

7. Mehrstufiges Planetenrad (16) eines wenigstens zwei mehrstufige Planetenräder (16) aufweisenden Planetengetriebes (12) in einer Mehrgang-Fahrradnabe (10), dadurch gekennzeichnet daß das Planetenrad umfaßt

   - ein erstes Planetenradteil (70) mit einem eine Planetenradstufe (16c) bildenden Wälzverzahnungsabschnitt (Abschnitt 74a) und einem eine Kupplungsaußenumfangsverzahnung (76) aufweisenden Kupplungsverzahnungsabschnitt; und
   - ein zweites Planetenradteil (80) mit wenigstens einem jeweils eine Planetenradstufe (16a,16b) bildenden Wälzverzahnungsabschnitt sowie einer Aufnahmeöffnung (82) für die Kupplungsaußenumfangsverzahnung (76) des ersten Planetenradteils (70), welche Aufnahmeöffnung (82) mit einer in die Kupplungsaußenumfangsverzahnung (76) eingreifenden Kupplungsinnenumfangsverzahnung (78) versehen ist,

wobei die Wälzverzahnung sowie die Kupplungsaußenumfangsverzahnung (76) des ersten Planetenradteils (70) gleiche Zähnezahl und Zahnkranzorientierung aufweisen, und wobei das zweite Planetenradteil (80) von einem Sinterteil gebildet ist.

8. Verfahren zur Herstellung eines mehrstufigen Planetenrads (16) für ein wenigstens zwei mehrstufige Planetenräder (16) aufweisendes Planetengetriebe (12) in einer Mehrgangfahrradnabe (10), wobei man

 - ein erstes Planetenradteil (70) mit einem eine Planetenradstufe (16c) bildenden Wälzverzahnungsabschnitt (Abschnitt 74a) und einen eine Kupplungsaußenumfangsverzahnung (76) aufweisenden Kupplungsverzahnungsabschnitt durch spanende Verfahren herstellt, wobei die Wälzverzahnung sowie die Kupplungsaußenumfangsverzahnung (76) gleiche Zähnezahl und Zahnkranzorientierung aufweisen, und
 - ein zweites Planetenradteil (80) als Sinterteil hergestellt mit wenigstens einem jeweils eine Planetenradstufe (16a,16b) bildenden Wälzverzahnungsabschnitt sowie einer Aufnahmeöffnung (82) für den Kupplungsverzahnungsabschnitt des ersten Planetenradteils (70), welche Aufnahmeöffnung (82) mit einer an die Kupplungsaußenumfangsverzahnung (76) angepaßten Kupplungsinnenumfangsverzahnung (78) versehen ist, und
 - daß man beide Planetenradteile (709,80) zusammensetzt.

9. Verfahren nach Anspruch 8, dadurch **gekennzeichnet,** daß man das erste Planetenradteil (70) in einer Aufspannung mit demselben Fräswerkzeug herstellt.

10. Verfahren nach Anspruch 9, dadurch **gekennzeichnet,** daß man die Kupplungsaußenumfangsverzahnung (76) des ersten Planetenradteils (70) mit geringer radialer Entfernung des Fräswerkzeugs von der Planetenradachse herstellt als die Walzverzahnung der Planetenradstufe (16) des ersten Planetenradteils (70).

11. Verfahren nach Anspruch 9 oder 10, dadurch **gekennzeichnet,** daß man bei der Herstellung des ersten Planetenradteils (70) dieses stufenweise abdreht, mit einem den Wälzverzahnungsabschnitt bildenden durchmessergrößerten Endabschnitt (74a) sowie einem durchmesserverringerten Abschnitt (Mittelabschnitt 74b sowie Endabschnitt 74c in Fig. 3), deren Durchmesser (d2) kleiner ist als der Fußkreisdurchmesser (d3) der Wälzverzahnung der Planetenradstufe (16c).

## Claims

1. Multi-speed cycle hub (10) with a planetary gearing arrangement (12) having at least two multi-step planet wheels (16), characterised in that the planet wheels (16) each comprise

 - a first planet wheel component (70) with a gear tooth portion (portion 74a) forming a planet wheel step (16c) and a coupling spline portion having external coupling splines (76); and
 - a second planet wheel component (80) with at least one gear tooth portion forming a respective planet wheel step (16a; 16b) as well as a receiving opening (82) for the coupling spline portion of the first planet wheel component (70), which opening (82) is provided with internal coupling splines (78) engaging in the external splines (76),

 the gear teeth and the external coupling splines (76), of the first planet wheel component (70) having the same number of teeth and tooth orientation and the second planet wheel component (80) being formed as a sintered component.

2. Multi-speed cycle hub according to claim 1, characterised **in that** the external splines (76) have a smaller root circle diameter (d5) than the gear teeth (d3) and that the tooth profile of the external splines (76) corresponds substantially to a cropped tooth form of the gear teeth with cylindrical cut surfaces concentric with the axis (78) of the planet wheel.

3. Multi-speed cycle hub according to claim 2, characterised **in that** the first planet wheel component (70) has a locating portion (portion 74b) between the gear tooth portion (portion 74a) and the coupling spline portion (portion 74c), the locating portion having a cylindrical external surface (80) having a diameter (d2) corresponding to the tip circle diameter of the external coupling splines and that a cylindrical internal surface (84) of the receiving opening (82) in the second planet wheel component (80) engages the external surface (80).

4. Multi-speed cycle hub according to one of the foregoing claims, characterised **in that** in the case of a three-step planet wheel (16) the second planet wheel component (80) has the planet wheel step (16a) having the greatest number of teeth and the intermediate step (16b).

**5.** Multi-speed cycle hub according to one of the foregoing claims, characterised **in that**
the teeth (81) of the internal coupling splines (78) have rounded-off tips.

**6.** Multi-speed cycle hub according to claim 5 characterised **in that**
the tips of the teeth are rounded-off substantially cylindrically.

**7.** Multi-step planet wheel (16) of a planetary gearing arrangement (12) having at least two multi-step planet wheels (16) in a multi-speed cycle hub (10) characterised **in that**
the planet wheel comprises

- a first planet wheel component (70) with a gear tooth portion (portion 74a) forming a planet wheel stage (16c) and a splined coupling portion having external coupling splines (76); and
- a second planet wheel component (80) having at least one gear tooth portion forming a respective one planet wheel step (16a, 16b) as well as a receiving opening (82) for the external coupling splines (76) of the first planet wheel component (70), which opening (82) is provided with internal coupling splines (78) engaging in the external coupling splines (76),

the gear teeth as well as the external coupling splines (76) of the first planet wheel component (70) having the same number of teeth and tooth orientation and the second planet wheel component being formed by a sintered component.

**8.** Method of manufacturing a multi-step planet wheel (16) for a planetary gearing arrangement (12) having at least two multi-step planet wheels (16) in a multi-speed cycle hub (10), in which there are formed

- a first planet wheel component (70) having a gear tooth portion (portion 74a) forming a planet wheel step (16c) and a splined coupling portion having external coupling splines (76) is produced by a machining process, the gear teeth and also the external coupling splines (76) having the same number of teeth and tooth set orientation, and
- a second planet wheel component (80) produced as a sintered component with at least one gear tooth portion forming a respective planet wheel step (16a, 16b) as well as a receiving opening (82) for the coupling spline portion of the first planet wheel component (70), which opening (82) is provided with internal coupling splines (78) matched to the external coupling splines (76), and

- the two planet wheel component (709, 80) are assembled together.

**9.** Method according to claim 8, characterised **in that**
the first planet wheel component (70) is produced in one chucking operation and using the same milling tool.

**10.** Method according to claim 9, characterised **in that**
the external coupling splines (76) on the first planet wheel component (70) are produced with a smaller radial spacing of the milling tool from the axis of the planet wheel than the gear teeth of the planet wheel step (16) of the first planet wheel component (70).

**11.** Method according to claim 9 or 10, characterised **in that,**
in the manufacture of the first planet wheel component (70) it is turned down in steps with an end portion (74a) of a diameter of a size to form the gear tooth portion as well as a portion of reduced diameter (central portion 74b and end portion 74c in Fig. 3), of which the diameter d2 is smaller than the root circle diameter (d3) of the gear teeth of the planet wheel step (16c).

**Revendications**

**1.** Moyeu de bicyclette à plusieurs vitesses (10) avec un engrenage planétaire (12) présentant au moins deux pignons planétaires à plusieurs niveaux (16), caractérisé en ce que les pignons planétaires (16) comprennent respectivement :

- une première partie du pignon planétaire (70) présentant une section de la denture des engrenages (section 74a) formant un niveau du pignon planétaire (16c) et une section de la denture d'accouplement présentant une denture périphérique extérieure d'accouplement (76); et
- une seconde partie du pignon planétaire (80) présentant au moins une section de la denture des engrenages formant respectivement un niveau du pignon planétaire (16a; 16b) ainsi qu'une ouverture de réception (82) pour la section de la denture d'accouplement de la première partie du pignon planétaire (70), laquelle ouverture de réception (82) est pourvue d'une denture périphérique intérieure d'accouplement (78) s'engrenant dans la denture périphérique extérieure d'accouplement (76),

et que la denture des engrenages ainsi que la denture périphérique extérieure d'accouplement (76) de la première partie du pignon planétaire (70) présentent un nombre de dents et une orientation de la couronne dentée identiques, et que la seconde partie du pignon planétaire (80) est une pièce frittée.

2. Moyeu de bicyclette à plusieurs vitesses selon la revendication 1, caractérisé en ce que la denture périphérique extérieure d'accouplement (76) présente un diamètre de pied (d5) inférieur à la denture des engrenages (avec d3), et que la forme de dent de la denture périphérique extérieure d'accouplement (76) correspond essentiellement à une forme de dent taillée de la denture des engrenages avec une surface de coupe cylindrique, concentrique par rapport à l'axe du pignon planétaire (78).

3. Moyeu de bicyclette à plusieurs vitesses selon la revendication 2, caractérisé en ce que la première partie du pignon planétaire (70) située entre la section de la denture des engrenages (section 74a) et la section de la denture d'accouplement (section 74c) présente une section de centrage (section 74b) ayant une surface périphérique extérieure cylindrique (80), elle-même présentant un diamètre (d2) correspondant au diamètre de tête de la denture périphérique extérieure d'accouplement, et qu'une surface périphérique intérieure cylindrique (84) de l'ouverture de réception (82) se trouve contre la seconde partie du pignon planétaire (80) au niveau de la surface périphérique extérieure (80).

4. Moyeu de bicyclette à plusieurs vitesses selon l'une des revendications précédente, caractérisé en ce que, dans le cas d'un pignon planétaire à trois niveaux (16), la deuxième partie du pignon planétaire (80) présente le niveau du pignon planétaire (16a) avec le nombre de dents le plus élevé et le niveau moyen du pignon planétaire (16b).

5. Moyeu de bicyclette à plusieurs vitesses selon l'une des revendications précédente, caractérisé en ce que les dents (81) de la denture périphérique intérieure d'accouplement (78) présentent des têtes de dent arrondies.

6. Moyeu de bicyclette à plusieurs vitesses selon la revendication 5, caractérisé en ce que les têtes de dent sont essentiellement arrondies de manière cylindrique.

7. Pignon planétaire à plusieurs niveaux (16) d'un engrenage planétaire (12) présentant au moins deux pignons planétaires à plusieurs niveaux (16) dans un moyeu de bicyclette à plusieurs vitesses (10), caractérisé en ce que le pignon planétaire comprend :

- une première partie du pignon planétaire (70) avec une section de la denture des engrenages (section 74a) formant un niveau du pignon planétaire (16c) et une section de la denture d'accouplement présentant une denture périphérique extérieure d'accouplement (76), et

- une seconde partie du pignon planétaire (80) avec au moins une section de la denture des engrenages formant respectivement un niveau du pignon planétaire (16a, 16b) ainsi qu'une ouverture de réception (82) pour la denture périphérique extérieure d'accouplement (76) de la première partie du pignon planétaire (70), laquelle ouverture de réception (82) est pourvue d'une denture périphérique intérieure d'accouplement (78) s'engrenant dans la denture périphérique extérieure d'accouplement (76),

et que la denture des engrenages ainsi que la denture périphérique extérieure d'accouplement (76) de la première partie du pignon planétaire (70) présentent un nombre de dents et une orientation de la couronne dentée identiques, et que la seconde partie du pignon planétaire (80) est une pièce frittée.

8. Procédé de fabrication du pignon planétaire à plusieurs niveaux (16) destinée à un engrenage planétaire (12) présentant au moins deux pignons planétaires à plusieurs niveaux (16) dans un moyeu de bicyclette à plusieurs vitesses (10), pour laquelle :

- une première partie du pignon planétaire (70) avec une section de denture des engrenages (section 74a) formant un niveau du pignon planétaire (16c) et une section de la denture d'accouplement présentant une denture périphérique extérieure d'accouplement (76) est fabriquée au moyen de procédés d'usinage par enlèvement de copeaux, où la denture des engrenages ainsi que la denture périphérique extérieure d'accouplement (76) présentent un nombre de dents et une orientation de couronne dentée identiques, et
- une seconde partie du pignon planétaire (80) fabriquée en tant que pièce frittée avec au moins une section de la denture des engrenages formant respectivement un niveau du pignon planétaire (16a, 16b) ainsi qu'une ouverture de réception (82) pour la section de la denture d'accouplement de la première partie du pignon planétaire (70), laquelle ouverture de réception (82) est pourvue d'une denture périphérique intérieure d'accouplement (78) adaptée à la denture périphérique extérieure d'accouplement, et
- que les deux parties du pignon planétaire (70 et 80) sont assemblées.

9. Procédé selon la revendication 8, caractérisé en ce que la première partie du pignon planétaire (70) est fabriquée en une opération de serrage à l'aide du même outil de fraisage.

10. Procédé selon la revendication 9, caractérisé en ce que la denture périphérique extérieure d'accouplement (76) de la première partie du pignon planétaire (70) est fabriquée avec une distance radiale de l'outil de fraisage par rapport à l'axe du pignon planétaire inférieure à celle requise pour la denture des engrenages du niveau du pignon planétaire (16) de la première partie du pignon planétaire (70).

11. Procédé selon la revendication 9 ou 10, caractérisé en ce que lors de la fabrication de la première partie du pignon planétaire (70), celle-ci est tournée niveau par niveau, avec une section finale (74a) de diamètre plus important et formant la section des engrenages ainsi qu'une section de diamètre réduit (section médiane 74b ainsi que section finale 74c en fig. 3), dont le diamètre (d2) est inférieur au diamètre de pied (d3) de la denture des engrenages du niveau du pignon planétaire (16c).

Fig. 1

Fig. 2

Fig. 3

Fig. 4

Fig. 5

EP 0 623 505 B1